(19) Europäisches Patentamt
European Patent Office
Office européen des brevets

(11) Publication number: **0 216 071**
**B1**

# (12) EUROPEAN PATENT SPECIFICATION

(45) Date of publication of patent specification: **17.11.88**

(51) Int. Cl.[4]: **F 02 D 33/02,** F 02 D 41/12, F 02 D 41/26

(21) Application number: **86110251.5**

(22) Date of filing: **25.07.86**

## (54) Method and device for controlling the idle speed of internal combustion engines.

(30) Priority: **05.08.85 JP 171167/85**

(43) Date of publication of application:
**01.04.87 Bulletin 87/14**

(45) Publication of the grant of the patent:
**17.11.88 Bulletin 88/46**

(84) Designated Contracting States:
**DE**

(56) References cited:
**EP-A-0 136 449**
**US-A-4 237 833**
**US-A-4 501 240**
**US-A-4 549 512**

(73) Proprietor: **HITACHI, LTD.**
**6, Kanda Surugadai 4-chome Chiyoda-ku**
**Tokyo 100 (JP)**

(72) Inventor: **Sakamoto, Masahide**
**B13, 1115-17, Inada**
**Katsuta-shi Ibaraki 312 (JP)**
Inventor: **Suda, Seiji**
**2649-83, Motoyoshida-machi**
**Mito-shi Ibaraki 310 (JP)**
Inventor: **Atago, Takeshi**
**1476-51, Tarasaki**
**Katsuta-shi Ibaraki 312 (JP)**
Inventor: **Nagano, Masami**
**1308-3, Tabiko**
**Katsuta-shi Ibaraki 312 (JP)**

(74) Representative: **Patentanwälte Beetz sen. - Beetz jun. Timpe - Siegfried - Schmitt-Fumian**
**Steinsdorfstrasse 10**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 216 071 B1**

**Description**

The present invention relates to a method and a device for controlling the idle speed of internal combustion engines which are particularly suited for the idle speed control of automobile engines.

In automobile gasoline engines etc., so-called idle speed control devices ('ISC devices') for automatically controlling the idle speed to predetermined values are used for reducing fuel costs, etc. in the mode of idling.

JP—A1—57-195831 relates to an idle speed control device based on feedback control with a control target value being the reference value of the idle speed in which the actual revolution speed of an engine in the idling mode is compared with the preset reference value of the idle speed so as to control the flow rate of intake air in accordance with the error between them. This feedback control has the disadvantage that, at rapid deceleration of the engine in, e.g., the case where the accelerator pedal is suddenly released, hunting may occur, so that a satisfactory controllability is not attained.

EP—A2—136 449 discloses a method and a device for controlling the idle speed of internal combustion engines by means of a feedback control of the intake air flow rate by using a reference value of the intake air flow rate in the idling mode as control target value, and the reference value is set in accordance with the deviation between the actual reference value of the idle speed being a function of the engine temperature and the actual speed of the engine in the idling mode.

The present invention starts from this prior art.

It is the object of the present invention to provide an electronic control method and device for controlling the idle speed of internal combustion engines which result in good follow-up properties at rapid deceleration of the engine and allow an idle speed control without the risk of hunting and with satisfactory controllability.

The above object is achieved according to the claims.

The concept of the present invention is characterized in that, when the deviation between the actual idle speed reference value and the actual engine speed is more than a predetermined value and continues for a predetermined time interval, a new reference value of the intake air flow rate is set and used for idle speed control, which represents the sum of the previous intake air flow reference value and the engine speed deviation multiplied by a predetermined multiplication coefficient.

In the following, the concept of the present invention will be explained with reference to the accompanying drawings, wherein

Fig. 1 is a schematic representation of an engine system to which the present invention is applied,

Figs. 2A and 2B are flow charts for explaining the operation of an electronic control device according to the present invention,

Fig. 3 is an explanatory diagram for comparing a prior-art example and the device of the present invention as to the convergences of the intake air flow rate and the engine revolution number in the idling mode, and

Fig. 4 is a diagram for explaining the function of correcting the reference value of the air flow rate according to the present invention.

The system shown in Fig. 1 comprises an intake pipe 1, a throttle valve 2, an idle switch 3, an injector (fuel injection valve) 4, a fuel pump 5, a fuel tank 6, a combustion chamber 7 in a cylinder, an air cleaner 8, an airflow meter (intake air flow rate sensor) 9, an engine speed sensor 10 detecting the revolution number N of the engine, an idle speed control valve (ISC valve) 11, a cooling water temperature sensor 12, and a control unit 13.

The intake air for the engine is supplied from the air cleaner 8 through the intake pipe 1 into the combustion chamber 7. The flow rate of the intake air is regulated by the throttle valve 2, and is measured by the airflow meter 9.

On the other hand, fuel is injected into the intake pipe 1 by means of the injector 4 so as to produce a fuel-air mixture. Supply of fuel from the fuel tank 6 to the injector 4 is performed by the fuel pump 5.

The ISC valve 11 is a kind of magnetic valve which is provided to bypass the throttle valve 2, and which is opened by an electric signal to form a passage for intake air bypassing the throttle valve 2.

The control unit 13 comprises a microcomputer. It receives signals from the idle switch 3, the airflow meter 9, the speed sensor 10, the cooling water temperature sensor 12, etc., and delivers control signals to the injector 4, the fuel pump 5, the ignition coils, etc., to control the supply of fuel to the engine, the air-fuel ratio, the ignition timing etc., and also to execute the processing shown in the flow charts of Figs. 2A and 2B and control the ISC valve 11 with a control signal $ISC_{ON}$ for idle speed control.

The ISC processing shown in Figs. 2A and 2B is executed every predetermined time period, for example, 10 ms. The respective operations will now be described with reference to the flow charts of Figs. 2A and 2B.

When the execution of ISC processing has been started, the engine rotational speed N and the intake air flow rate $Q_A$ are first received from the speed sensor 10 and the airflow meter 9 at steps 20 and 21, respectively. At step 22, the water temperature $T_W$ is read with the cooling water temperature sensor 12. Step 23 searches for the reference value $N_{REF}$ of the engine speed corresponding to the water temperature $T_W$. Step 24 searches for the reference value $Q_{A0}$ of the air flow rate corresponding to the water temperature $T_W$. At the next step 25, the signal of the idle switch 3 is examined to decide whether or not the engine has been controlled into an idling state.

When the result of step 25 is 'idle switch OFF,' that is, when it has been decided that the engine has not been controlled into the idling state, steps

26 and 27 are executed to clear a flag A and a timer 1, and data items $\Sigma\Delta Q$, P and I, respectively. Here, the data $\Sigma\Delta Q$ express the integrated value of the errors $\Delta Q$ between the values of the intake air flow rate $Q_A$ and the reference value $Q_{AREF}$ thereof, and the data items P and I express well-known proportional and integral components employed in feedback control. The flag A and the timer 1 will be explained later.

After the processing steps 26 and 27 have thus ended, the control flow proceeds to a processing step 28 at which the water temperature $T_W$ is read with the cooling water temperature sensor 12. At the next step 29, this value $T_W$ is used for a table search so as to find a basic control value ISC $T_W$. At step 30, the integral component I and the proportional component P are added to this value ISC $T_W$ so as to obtain the control signal ISC ON of the ISC valve 11. This signal is output to the ISC valve 11 as the processing of step 31. In this case, the processing of step 27 has been gone through, and hence, both the data items I and P are zero. At this time, accordingly, the control signal $ISC_{ON}$ is equal to the basic control value ISC $T_W$.

The operations in this situation are illustrated by the time chart in Fig. 3. Since the idle switch 3 is OFF under these conditions, the engine system is in a state before the time $t_0$ in Fig. 3, and the signal ISC ON of the ISC valve 11 is held at the basic control value ISC $T_W$ given on the basis of the cooling water temperature $T_W$. Thus, the degree of opening of the intake air passage bypassing the throttle valve 2 has a magnitude corresponding to this signal ISC ON.

On this occasion, the idle switch 3 is OFF, that is, the throttle valve 2 is open. Therefore, the engine speed N corresponding to the intake air flow rate $Q_A$ is controlled by the degree of opening of the throttle valve 2.

Next, it is assumed that the time $t_0$ has been reached at which the accelerator pedal is entirely released to bring the throttle valve 2 into its fully closed position.

Then, when the processing of Figs. 2A and 2B has begun at the subsequent timing, the result of step 25 becomes ON this time.

In this case, the control flow proceeds to step 32, at which the flag A is examined. Since, on this occasion, step 26 has just been executed, the result of decision at this step 32 naturally becomes 0. On this occasion, accordingly, the timer 1 is incremented by 1 at step 33. In the next step 34, it is examined whether or not the timer 1 has reached $T_1$ seconds, and the result thereof becomes NO (because a value near 5 seconds is selected as the time interval $T_1$), so that this step is followed by step 35.

In step 35 it is examined whether or not the engine speed N has come close to the reference value $N_{REF}$ of the idle speed within a predetermined error $N_1$ of the engine speed. As the error $N_1$, in this case, a value of 100 to 200 $min^{-1}$ is selected. When the result of step 35 is NO, the control flow skips step 36 and proceeds to step 37.

On the other hand, when the result of steps 34 or 35 is YES, the control flow proceeds to step 37 after the flag A is set at step 36.

At step 37, the preset standard value $Q_{AO}$ of the intake air flow rate is set as the reference value $Q_{AREF}$ of the intake air flow rate. Subsequently, step 38 evaluates the error $\Delta Q$ between the reference value $Q_{AREF}$ and the actual value $Q_A$ of the intake air flow rate, and step 39 adds this new error $\Delta Q$ to the value of the errors $\Delta Q$ successively integrated till then. Thereafter, at step 40, the proportional component P is evaluated by multiplying the error $\Delta Q$ by a predetermined coefficient kp, and at step 41, the integral component I is evaluated by multiplying $\Sigma\Delta Q$ by a predetermined coefficient $k_i$.

In this situation, accordingly, the signal ISC ON to be output later at step 31 becomes a value with this proportional component P and this integral component I added thereto. Here, the feedback control of the intake air flow rate $Q_A$ in which the reference value $Q_{AREF}$ of the intake air flow rate is the control target value is attained for the first time. As a result, the duty of the control signal ISC ON for the ISC valve 11 is lowered by every (P+I) from the value ISC $T_W$ in succession since the time $t_0$ in Fig. 3. Accordingly, the intake air flow rate $Q_A$ converges to the reference value $Q_{AREF}$, and also the engine speed N converges to the reference value $N_{REF}$.

When, in this manner, the time interval $T_1$ has lapsed or the engine speed N has come close to the reference value $N_{REF}$ within the error $N_1$ after the time $t_0$, step 36 is executed to set the flag A at this point of time.

After the flag A has been set, processing steps 42 to 46 are executed instead of steps 33 to 37 this time.

First, it is decided in step 42 whether or not the absolute value of the error between the engine speed N and the reference value $N_{REF}$ is greater than a predetermined value $N_2$. When the result of the decision is NO, merely a timer 2 is cleared by executing step 43. The predetermined value $N_2$ in this case is selected to 50 $min^{-1}$ by way of example.

Next, when the result of step 42 is YES, the timer 2 is incremented by 1 at step 44. Thereafter, it is examined in step 45 whether or not the timer 2 has reached at least the predetermined time interval $T_2$. When the result of the decision is NO, step 46 is skipped. The predetermined time interval $T_2$ is selected to 1 s by way of example.

When the result of step 46 has become YES, step 46 is executed at which the error $(N_{REF}-N)$ between the reference value $N_{REF}$ and the actual value N of the engine speed as multiplied by a predetermined coefficient $k_1$ is added to the reference value $Q_{AREF}$ of the intake air flow rate used till then, thereby to prepare a new reference value $Q'_{AREF}$. In contrast, when this step 46 is not gone through, either the reference value $(Q_{AO}=Q_{AREF})$ already set at step 37 or a reference value set at step 46 before is left as $Q_{AREF}$ without any change, whereupon the control flow proceeds to step 38.

Accordingly, in the case where the control flow

has proceeded from step 32 to step 42, the situation of the control is as illustrated in Fig. 4. That is, it is examined whether or not the engine speed N lies within a range less than the predetermined value $N_2$ relative to the reference value $N_{REF}$, and when the engine speed N has continued to exceed the range for at least the time interval $T_2$, the reference value $Q_{AREF}$ of the intake air flow rate is corrected by a magnitude corresponding to the error between the engine revolution number N and the reference value $N_{REF}$. As the reference value $N_{REF}$ of the idle speed, a value of 650 $min^{-1}$ is selected by way of example.

The operations resulting from the repetition of the processing in Figs. 2A and 2B will be summed up:

(1) When the accelerator pedal is released to bring the engine into the idling state, the result of step 25 becomes ON, and consequently, the steps 38 to 41 and the steps 28 to 31 are executed without fail. Therefore, the feedback control of the intake air flow rate $Q_A$ in which the control target value is the reference value $Q_{AREF}$ of the intake air flow rate is attained as illustrated after the time $t_0$ in Fig. 3, and the control in which the engine speed N converges to the idle speed reference value $N_{REF}$ is attained.

(2) For a while after the idling state has been established, the reference value $Q_{AREF}$ of the intake air flow rate is put by the processing of step 37 to the standard value $Q_{AO}$ which has been previously set in correspondence with the reference value $N_{REF}$ of the idle speed, and this standard value serves as the control target value of the intake air flow rate $Q_A$. However, when the time interval $T_1$ lapses or the engine speed N approaches the reference value $N_{REF}$ within the predetermined value $N_1$ owing to the processing of steps 33 to 36, the function of correcting the reference value $Q_{AREF}$ of the intake air flow rate as illustrated in Fig. 4 is fulfilled owing to the steps 42 to 46. Thus, even in a case where the relation of the reference value $Q_{AREF}$ of the intake air flow rate to the reference value $N_{REF}$ of the idle speed has altered due to a change in the idle running conditions of the engine, for example due to a change in the driving conditions of an auxiliary machine, a control which holds the engine speed N precisely at the reference value $N_{REF}$ is always attained.

Although, in the foregoing embodiment, the reference value $N_{REF}$ of the idle speed is fixed, it may well be varied according to the running conditions of the engine.

By way of example, when this reference value $N_{REF}$ is given as a function of the cooling water temperature of the engine, a fast idle speed control (FISC) function can be afforded. Besides, when the reference value is varied according to turning on/off an auxiliary machine, such as car cooler, an idle-up function is readily added.

It is needless to say that the present invention is applicable not only to engines of fuel injection type, as shown in Fig. 2, but also to carburetor type engines.

As described above, according to the present invention, the control target value for the feedback control of the intake air flow rate in the mode of idling is not based on the reference value of the idle speed of the engine but on the reference value of the intake air flow rate corresponding thereto. Therefore, even in case of a rapid deceleration and transition to idling, there is no fear of occurrence of hunting, and an excellent controllability is readily attained under a satisfactory responsiveness.

**Claims**

1. A method for controlling the idle speed of internal combustion engines by means of a feedback control of the intake air flow rate by using a reference value ($Q_{AREF}$) of the intake air flow rate in the idling mode as control target value, and the reference value ($Q_{AREF}$) is set in accordance with the deviation ($N_{REF}-N$) between the actual idle speed reference value ($N_{REF}$) being a function of the engine temperature and the actual engine speed (N) in the idling mode, characterized in that,

when the deviation ($N_{REF}-N$) between the actual idle speed reference value ($N_{REF}$) and the actual engine speed (N) is more than a predetermined value ($N_2$) and continues for a predetermined time interval ($T_2$), a new reference value ($Q'_{AREF}$) of the intake air flow rate corresponding to

$$Q'_{AREF}=Q_{AREF}+k_1(N_{REF}-N),$$

whereby $k_1$ is a predetermined multiplication coefficient, is set and used for idle speed control.

2. An electric control device for controlling the idle speed of internal combustion engines comprising control means for feedback controlling the intake air flow rate by using a reference value ($Q_{AREF}$) of the intake air flow rate in the idling mode as control target value and including setting means for setting the reference value ($Q_{AREF}$) in accordance with the deviation ($N_{REF}-N$) between the actual reference value ($N_{REF}$) of the idle speed being a function of the engine temperature and the actual engine speed (N) in the idling mode, characterized in that the setting means, when the deviation ($N_{REF}-N$) between the actual reference value ($N_{REF}$) and the actual speed (N) is more than a predetermined value ($N_2$) and continues for a predetermined time interval ($T_2$), set a new reference value ($Q'_{AREF}$) of the intake air flow rate corresponding to

$$Q'_{AREF}=Q_{AREF}+k_1(N_{REF}-N),$$

whereby $k_1$ is a predetermined multiplication coefficient.

**Patentansprüche**

1. Verfahren zur Regelung der Leerlaufdrehzahl von Brennkraftmaschinen durch selbsttätige

Regelung der Saugluftdurchflußmenge unter Verwendung eines Bezugswerts ($Q_{AREF}$) der Saugluftdurchflußmenge im Leerlauf als Regelungs-Endwert, wobei der Bezugswert ($Q_{AREF}$) nach Maßgabe der Differenz ($N_{REF}-N$) zwischen dem Istleerlaufdrehzahl-Bezugswert ($N_{REF}$) als Funktion der Motortemperatur und der Istdrehzahl (N) des Motors im Leerlauf eingestellt wird, dadurch gekennzeichnet, daß, wenn die Differenz ($N_{REF}-N$) zwischen dem Istleerlaufdrehzahl-Bezugswert ($N_{REF}$) und der Istdrehzahl (N) des Motors höher als ein vorbestimmter Wert ($N_2$) ist und während eines vorgegebenen Zeitintervalls ($T_2$) so bleibt, ein neuer Bezugswert ($Q'_{AREF}$) der Saugluftdurchflußmenge entsprechend

$$Q'_{AREF}=Q_{AREF}+k_1(N_{REF}-N),$$

wobei $k_1$ ein vorbestimmter Multiplikations-Koeffizient ist, eingestellt und für die Leerlaufregelung genützt wird.

2. Elektrische Regelvorrichtung zur Regelung der Leerlaufdrehzahl von Brennkraftmaschinen, umfassend eine Regeleinheit zur selbsttätigen Regelung der Saugluftdurchflußmenge unter Verwendung eines Bezugswerts ($Q_{AREF}$) der Saugluftdurchflußmenge im Leerlauf als Regelungs-Endwert, und eine Einstelleinheit zum Einstellen des Bezugswerts ($Q_{AREF}$) nach Maßgabe der Differenz ($N_{REF}-N$) zwischen dem Istbezugswert ($N_{REF}$) der Leerlaufdrehzahl als Funktion der Motortemperatur und der Ist-Motordrehzahl (N) im Leerlauf, dadurch gekennzeichnet, daß die Einstelleinheit, wenn die Differenz ($N_{REF}-N$) zwischen dem Istleerlaufdrehzahl-Bezugswert ($N_{REF}$) und der Istdrehzahl (N) des Motors höher als ein vorbestimmter Wert ($N_2$) ist und während eines vorgegebenen Zeitintervalls ($T_2$) so bleibt, einen neuen Bezugswert ($Q'_{AREF}$) der Saugluftdurchflußmenge entsprechend

$$Q'_{AREF}=Q_{AREF}+k_1(N_{REF}-N),$$

wobei $k_1$ ein vorbestimmter Multiplikations-Koeffizient ist, einstellt.

**Revendications**

1. Procédé pour régler la vitesse de ralenti de moteurs à combustion interne au moyen d'une commande de rétroaction du débit d'air d'admission moyennant l'utilisation d'une valeur de référence ($Q_{AREF}$) du débit d'air d'admission dans le mode de ralenti en tant que valeur cible de commande, et la valeur de référence ($Q_{AREF}$) étant réglée conformément à l'écart ($N_{REF}-N$) entre la valeur réelle de référence de la vitesse de ralenti ($N_{REF}$), qui est fonction de la température du moteur, et la vitesse réelle (N) du moteur pendant le mode de ralenti, caractérisé en ce que lorsque l'écart ($N_{REF}-N$) entre la valeur réelle de référence de la vitesse de ralenti ($N_{REF}$) et la vitesse réelle (N) du moteur est supérieure à une valeur prédéterminée ($N_2$) et est présent pendant un intervalle de temps prédéterminé ($T_2$), une nouvelle valeur de référence ($Q'_{AREF}$) du débit d'air d'admission, correspondant à

$$Q'_{AREF}=Q_{AREF}+k_1(N_{REF}-N),$$

où $k_1$ est un coefficient multiplicatif prédéterminé, est réglée et utilisée pour la commande de la vitesse de ralenti.

2. Dispositif de commande électrique pour régler la vitesse de ralenti de moteurs à combustion interne comprenant des moyens de commande pour la commande par rétroaction du débit d'air d'admission moyennant l'utilisation d'une valeur de référence ($Q_{AREF}$) du débit d'air d'admission dans le mode de ralenti en tant que valeur cible de commande et incluant des moyens de réglage servant à régler la valeur de référence ($Q_{AREF}$) conformément à l'écart ($N_{REF}-N$) entre la valeur réelle de référence ($N_{REF}$) de la vitesse de ralenti, qui est fonction de la température du moteur, et la vitesse réelle (N) du moteur dans le mode de ralenti, caractérisé en ce que, lorsque l'écart ($N_{REF}-N$) entre la valeur réelle de référence ($N_{REF}$) et la vitesse réelle (N) est supérieur à une valeur prédéterminée ($N_2$) et est présent pendant un intervalle de temps prédéterminé ($T_2$), les moyens de réglage règlent une nouvelle valeur de référence ($Q'_{AREF}$) du débit d'air d'admission, correspondant à

$$Q'_{AREF}=Q_{AREF}+k_1(N_{REF}-N),$$

où $k_1$ est un coefficient multiplicatif prédéterminé.

figures

FIG. 1

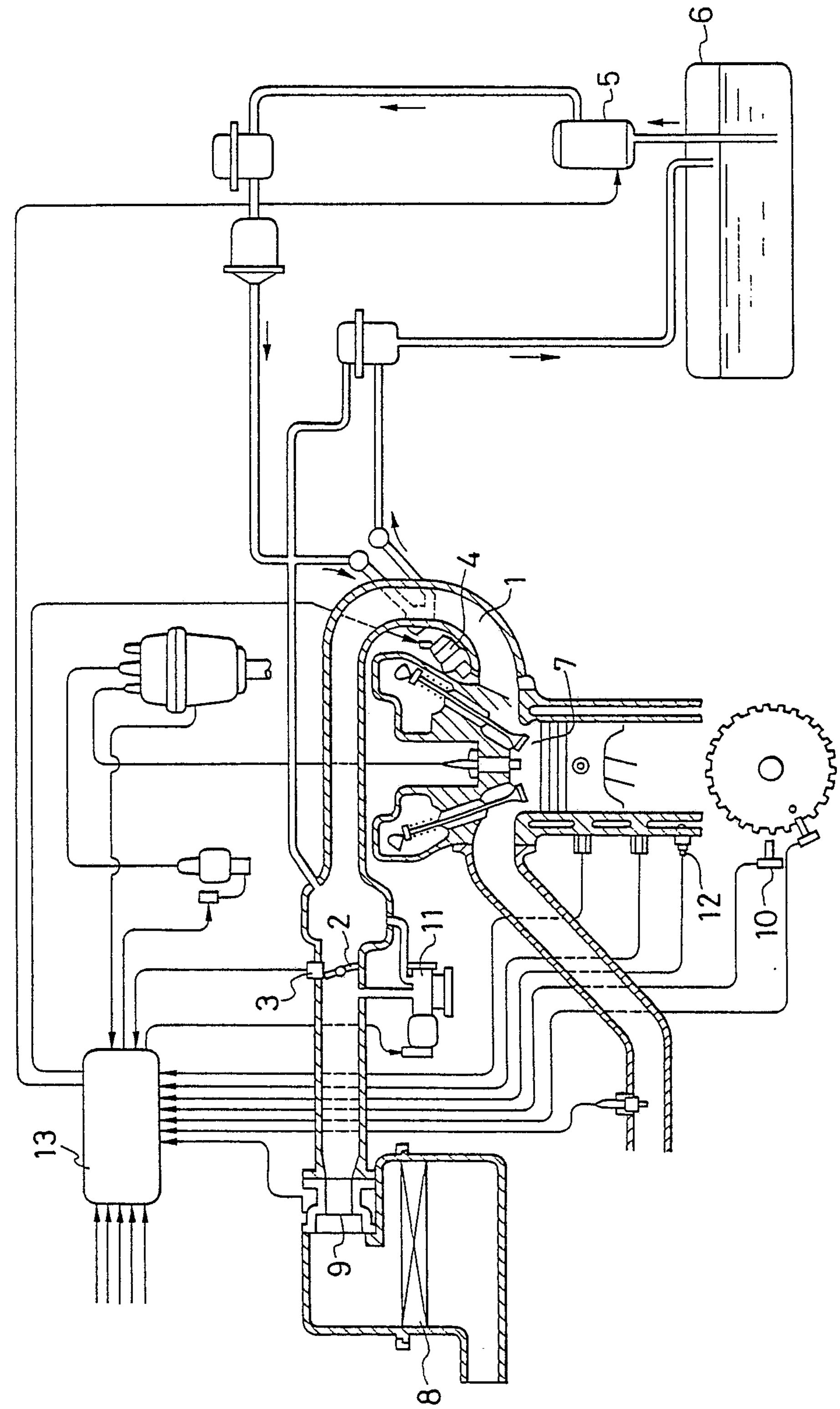

FIG. 2A

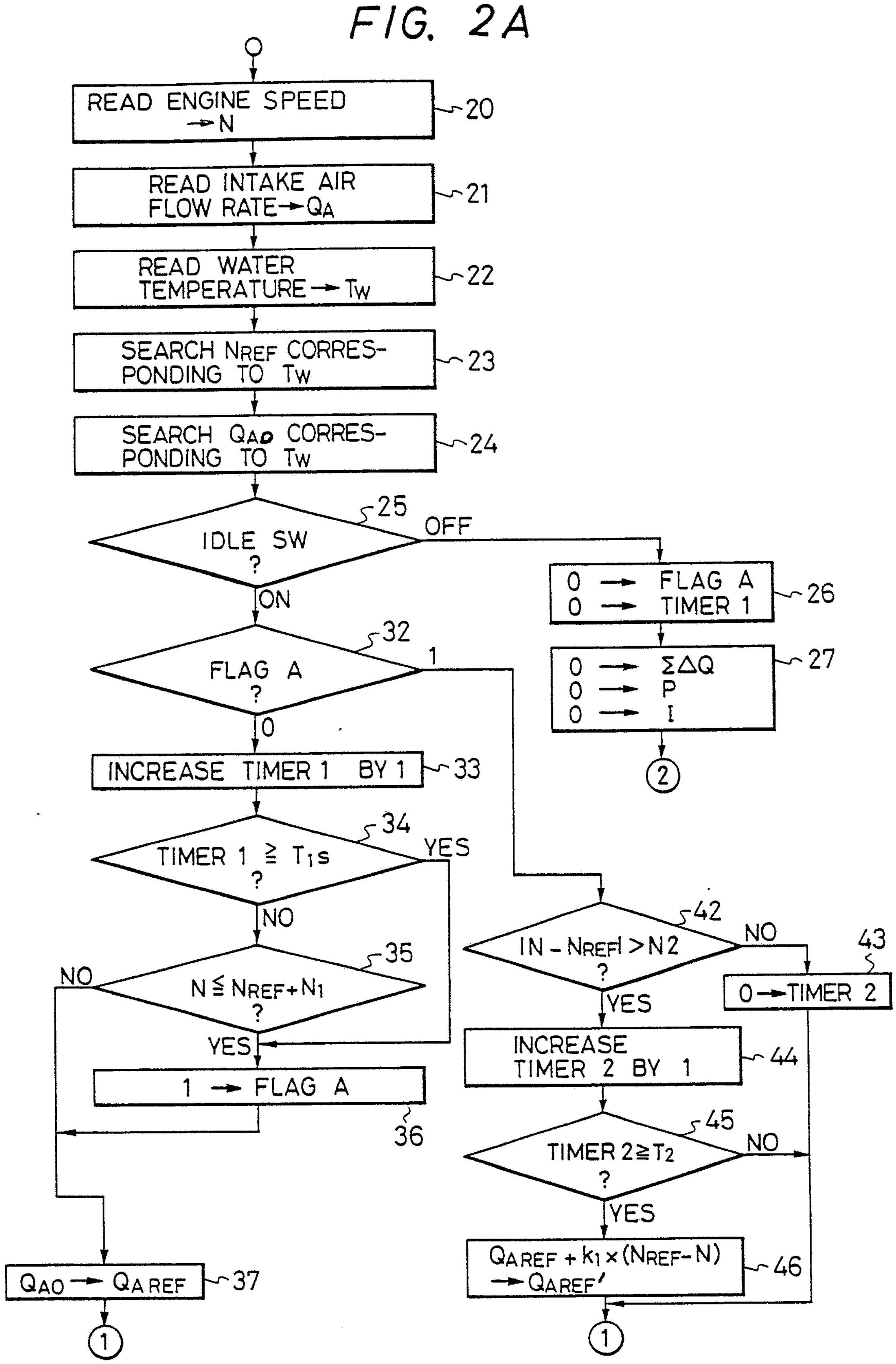
READ ENGINE SPEED → N
20
READ INTAKE AIR FLOW RATE → QA
21
READ WATER TEMPERATURE → Tw
22
SEARCH NREF CORRESPONDING TO Tw
23
SEARCH QA0 CORRESPONDING TO Tw
24
IDLE SW ?
25
OFF
ON
0 → FLAG A
0 → TIMER 1
26
0 → ΣΔQ
0 → P
0 → I
27
2
FLAG A ?
32
1
0
INCREASE TIMER 1 BY 1
33
TIMER 1 ≧ T1s ?
34
YES
NO
N ≦ NREF+N1 ?
35
NO
YES
1 → FLAG A
36
QA0 → QA REF
37
1
IN - NREFI > N2 ?
42
NO
YES
0 → TIMER 2
43
INCREASE TIMER 2 BY 1
44
TIMER 2 ≧ T2 ?
45
NO
YES
QAREF + k1 × (NREF-N) → QAREF′
46
1

FIG. 2B

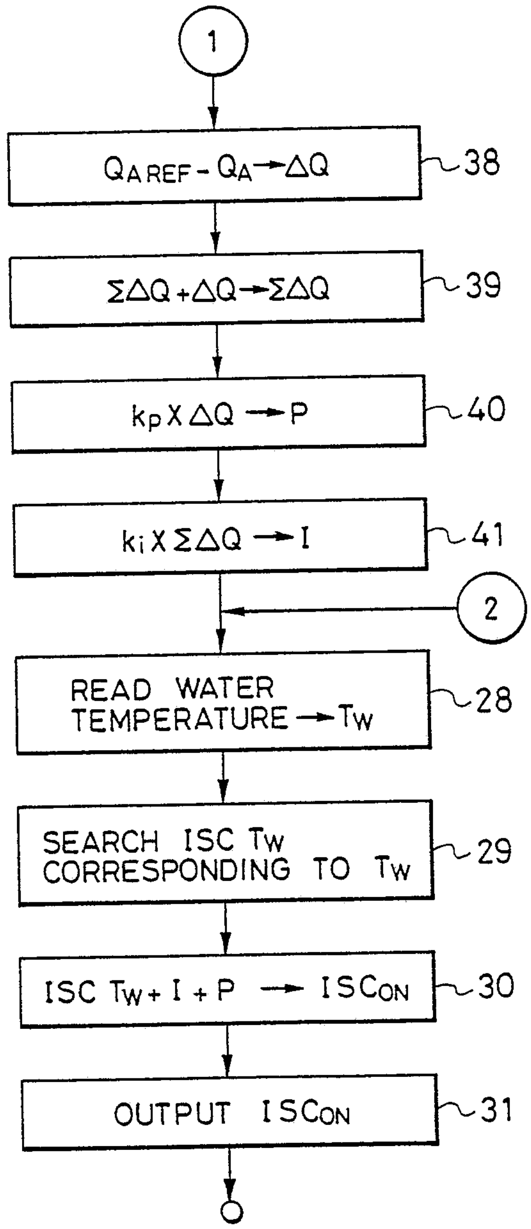
1
$Q_{A REF} - Q_A \rightarrow \Delta Q$
38
$\Sigma\Delta Q + \Delta Q \rightarrow \Sigma\Delta Q$
39
$k_p \times \Delta Q \rightarrow P$
40
$k_i \times \Sigma\Delta Q \rightarrow I$
41
2
READ WATER TEMPERATURE → $T_W$
28
SEARCH ISC $T_W$ CORRESPONDING TO $T_W$
29
ISC $T_W$ + I + P → $ISC_{ON}$
30
OUTPUT $ISC_{ON}$
31

FIG. 3

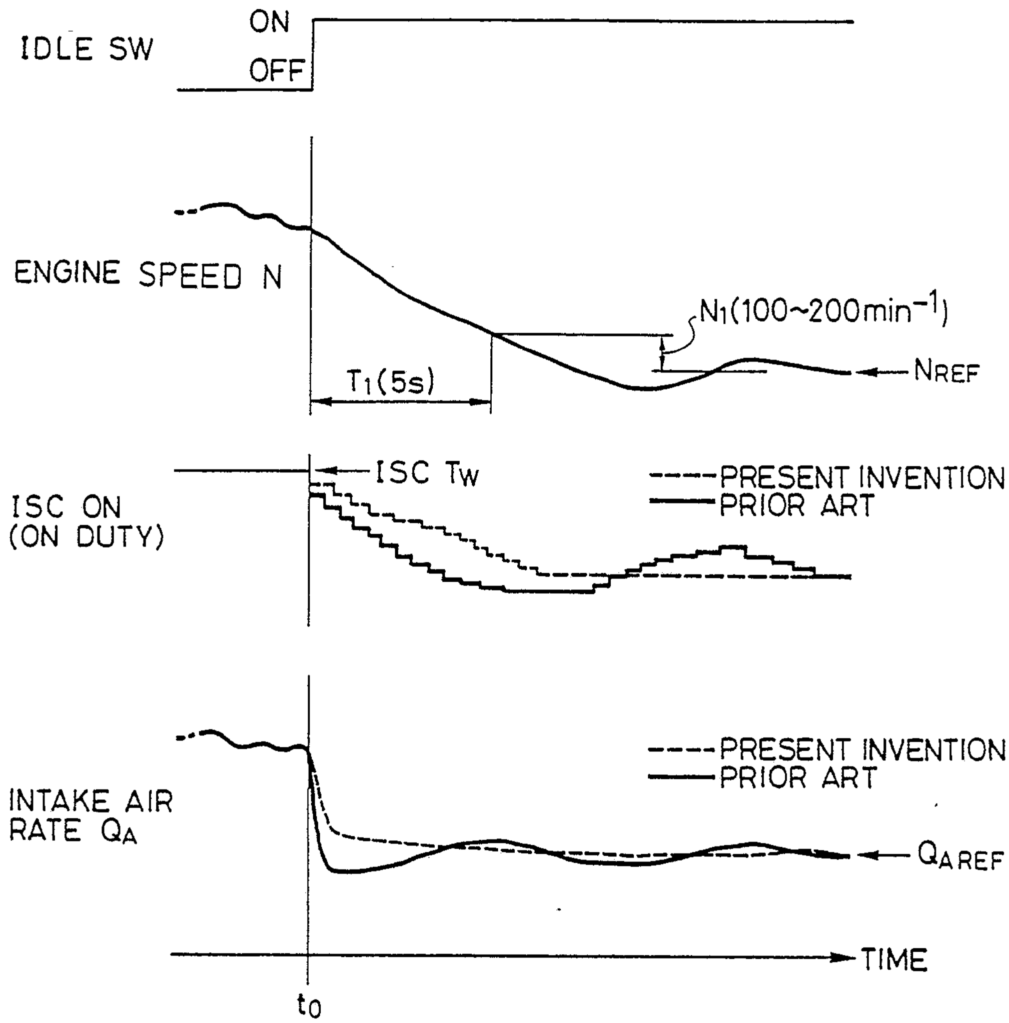
IDLE SW
ON
OFF
ENGINE SPEED N
$N_1$(100~200min$^{-1}$)
$N_{REF}$
$T_1$(5s)
ISC ON
(ON DUTY)
ISC Tw
PRESENT INVENTION
PRIOR ART
INTAKE AIR
RATE $Q_A$
PRESENT INVENTION
PRIOR ART
$Q_{AREF}$
TIME
$t_0$

FIG. 4

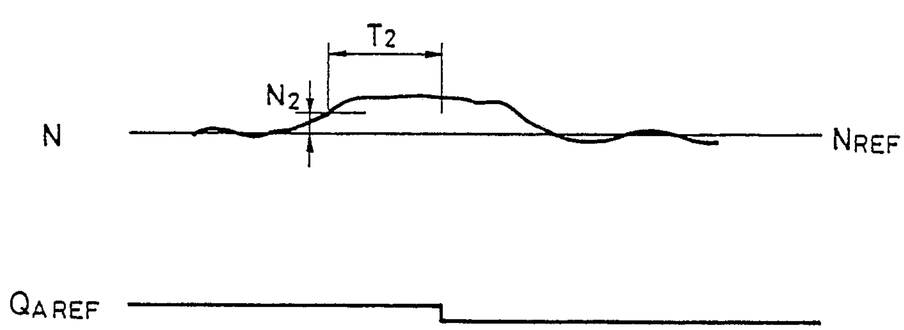
$T_2$
$N_2$
N
$N_{REF}$
$Q_{AREF}$